# EUROPÄISCHE PATENTSCHRIFT

(11) **EP 2 274 475 B1**
(45) Veröffentlichungstag und Bekanntmachung des Hinweises auf die Patenterteilung: **21.09.2011**
(21) Anmeldenummer: 09732075.8
(22) Anmeldetag: 15.04.2009
(51) Int. Cl.: D21F 5/02, D21G 1/02, B31F 1/07, H05B 3/00

(54) **BEHEIZTE PRÄGEWALZE**
HEATED EMBOSSING ROLL
CYLINDRE GAUFREUR CHAUFFÉ

(30) Priorität: 18.04.2008 DE 102008019720
(43) Veröffentlichungstag der Anmeldung: 19.01.2011
(73) Patentinhaber: Leonhard Kurz Stiftung & Co. KG, 90763 Fürth (DE)
(72) Erfinder: MITSAM, Reinwald, 90579 Langenzenn (DE)
(74) Vertreter: Zinsinger, Norbert
(86) Internationale Anmeldenummer: PCT/EP2009/002748
(87) Internationale Veröffentlichungsnummer: WO 2009/127399

(56) Entgegenhaltungen:
- DE-A1- 2 112 403
- US-A- 4 252 184
- US-A- 5 821 498

## Beschreibung

Die Erfindung betrifft eine beheizbare Hohlwalze, insbesondere eine Prägewalze.

Es sind elektrisch beheizbare Prägewalzen bekannt, die mit Keramikheizelementen versehen sind, die durch Spannbänder an den Walzenmantel angelegt sind. Die Temperaturmessung erfolgt von innen, Energiezufuhr und Messwertübertragung erfolgen mit Schleifringen. Die Temperaturkonstanz beträgt etwa 4 - 5 K im eingeregelten Zustand, bei Produktionsstart und bei einem Stop schwingt die Temperatur um etwa 15 K über.

In der US 3 105 133 ist eine beheizbare Hohlwalze beschrieben, deren Walzenmantel als Hohlkörper ausgebildet ist, der mit einem Eutektikum gefüllt ist. Das Eutektikum ist bei Zimmertemperatur fest und bei Arbeitstemperatur der Walze flüssig. Die Hohlwalze wird durch im Innenraum der Hohlwalze angeordnete stabförmige elektrische Heizelemente beheizt, die achsparallel angeordnet sind. Zur Temperaturregelung ist ein als Bimetallschalter ausgebildeter Temperaturfühler vorgesehen, der in das Eutektikum eingebracht ist.

In der DE 40 33 986 A1 ist eine beheizbare Walze, insbesondere zur Bearbeitung von bahnartigem Material wie beispielsweise Papier beschrieben, die einen Walzenkörper mit peripheren Kanälen bzw. Bohrungen aufweist, die vorzugsweise axialparallel zum Walzenkörper angelegt sind. In den Bohrungen sind Heizelemente angeordnet, die sich in axialer Richtung parallel zum Walzenkörper erstrecken. Die Übertragung der Heizenergie von dem Heizelement auf den Walzenkörper erfolgt durch eine Konvektionsflüssigkeit.

In der DE 10 2005 034 060 A1 ist eine Heizwalze eines Kalanders beschrieben, die mit einem Wärmeträgermedium beheizt wird und die über eine induktive Zusatzheizung verfügt. Mit Hilfe der Zusatzheizung kann eine rasche Anpassung an unterschiedliche Materialsorten, beispielsweise unterschiedliche Papiersorten erfolgen. Durch die Kombinationsheizung wird die Regelbarkeit des Wärmeeintrags verbessert, denn die induktive Zusatzheizung weist eine geringe thermische Trägheit auf.

Die DE 21 12 403 A1 beschreibt eine beheizbare Walze mit einem hohlzylinderförmigen Walzenkörper, der in der Innenwand des Walzenkörpers eine nutförmige Ausnehmung zur Aufnahme eines einzigen elektrischen Heizelements aufweist.

Die US 5 821 498 beschreibt eine elektrisch beheizte Walze und ein Verfahren zum Beheizen der Walze. Die Walze weist in der Wand der Walze ausgebildete Bohrungen zur Aufnahme von elektrischen Widerstandsheizelementen auf. Die Walze kann eine in der Außenwand der Walze angeordnete spiralförmige Nut zur Aufnahme von Widerstandsheizelementen aufweisen.

Aufgabe der vorliegenden Erfindung ist es, eine beheizbare Walze mit verbesserter Temperaturregelbarkeit anzugeben.

Erfindungsgemäß wird diese Aufgabe mit einer beheizbaren Walze, insbesondere zur Bearbeitung von bahnartigen Materialien, mit einem hohlzylinderförmigen Walzenkörper, der eine nutförmige Ausnehmung zur Aufnahme von Heizelementen aufweist, gelöst, wobei die Heizelemente im wärmeleitenden Kontakt zu dem Walzenkörper stehen, und wobei die Heizelemente elektrische Heizelemente sind, wobei vorgesehen ist, dass der Walzenkörper in der Innenwand die nutförmige Ausnehmung zur Aufnahme von Heizelementen aufweist, dass die Walze in axialer Erstreckung angeordnete Heizzonen aufweist, dass pro Heizzone mindestens ein Heizelement vorgesehen ist, und dass die Anschlüsse benachbarter Heizelemente um 180° versetzt angeordnet sind.

Durch den wärmeleitenden Kontakt zwischen dem in der nutförmigen Ausnehmung angeordneten Heizelement und dem Walzenkörper wird ein sehr guter Wärmeübergang von dem Heizelement auf den Walzenkörper erreicht. Konvektionsflüssigkeiten zur gleichmäßigen Wärmeübertragung und/oder zur Senkung der maximalen Temperatur des Heizelements werden nicht benötigt.

Weiter ist das Heizelement in der nutförmigen Ausnehmung mechanisch geführt, so dass es zum einen sicher fixiert ist und zum anderen ohne Zuhilfenahme von Montierhilfen leicht montierbar ist.

Durch den sehr guten Wärmeübergang von dem Heizelement auf den Walzenkörper wird weiter eine Überhitzung des Heizelements vermieden, wodurch eine erhöhte Lebensdauer und Zuverlässigkeit erreicht wird.

Es können beispielsweise kreisringförmige Nuten vorgesehen sein, die in axialer Richtung nebeneinander angeordnet sind.

Besonders bevorzugt ist, wenn die nutförmige Ausnehmung in der Innenwand des Walzenkörpers in Form einer Gewindebahn verläuft. Dadurch wird insbesondere der mechanische und/oder elektrische Installationsaufwand der einzelnen Heizelemente im Inneren des Walzenkörpers und außerhalb des Walzenkörpers reduziert und es wird eine besonders gleichmäßige Erwärmung des Walzenkörpers erzielt. Wie bereits weiter oben ausgeführt, wird das Heizelement bereits bei der Montage in der Nut geführt, so dass es vorgesehen sein kann, das Heizelement erst bei der Montage zu einem an dem Walzenkörper anliegenden wendelförmigen Heizelement zu formen. Es ist so auch nicht notwendig, das Heizelement zu einer Wendel vorzuformen, in den Walzenkörper einzubringen und sodann zu fixieren, beispielsweise ihn in ein Kleber- oder Kittschicht einzubetten. Durch die Anordnung des Heizelements in einer nutförmigen Ausnehmung in Form einer Gewindebahn kann auf einfache Weise ein konstanter Windungsabstand zwischen benachbarten Windungen der Heizwendel ausgebildet werden, so dass die Temperatur auf der Walzenoberfläche nur geringe lokale Abweichungen aufweist. Es ist aber auch möglich, durch eine nicht konstante Gewindesteigung gezielt Temperaturverläufe auf der Walzenoberfläche auszubilden, wobei mit zunehmender Gewindesteigung, d. h. mit zunehmendem Windungsabstand, die mittlere Oberflächentemperatur des Walzenkörpers abnimmt und mit abnehmender Gewindesteigung, d. h. mit sinkendem Windungsabstand, die mittlere Oberflächentemperatur des Walzenkörpers zunimmt. So kann es vorgesehen sein, in den Randbereichen des Walzenkörpers eine hohe Gewindesteigung vorzusehen, d. h. eine großen Windungsabstand, und im Mittelteil des Walzenkörpers eine niedrige Gewindesteigung vorzusehen, d. h. einen geringen Windungsabstand, so dass der Temperaturverlauf im Btriebseinsatz über dem Walzenkörper im Wesentlichen konstant ist und ein Temperaturanstieg in den Randbereichen des Walzenkörpers bzw. ein Temperaturabfall im Mittelteil des Walzenkörpers vermieden ist. Untersuchungen haben gezeigt, dass hierdurch insbesondere im Randbereich des Walzenkörpers verursachte Verspannungen vermieden werden können und so das Prägeergebnis verbessert werden kann. Allerdings ist es beispielsweise auch möglich, die Gewindesteigungsverhältnisse entgegengesetzt zu vorhergehendem Ausführungsbeispiel auszubilden, wenn im Betriebseinsatz ohne die genannten Maßnahmen der Mittelabschnitt des Walzenkörpers eine höhere Temperatur aufweisen würde als die Randabschnitte.

Es kann vorgesehen sein, dass das Heizelement als rohrförmiges Heizelement ausgebildet ist. Das Heizelement kann vorzugsweise einen kreisförmigen Querschnitt aufweisen, doch es kann auch einen anderen Querschnitt aufweisen, beispielsweise einen ovalen oder rechteckigen Querschnitt. Der kreisförmige Querschnitt kann bevorzugt sein, weil er gegen Verwindung des Heizelements um seine Längsachse unempfindlich ist, was für den ovalen oder rechteckigen Querschnitt beispielsweise nicht zutrifft.

Es kann weiter vorgesehen sein, einen solchen Querschnitt für das Heizelement zu wählen, der dem Querschnitt der nutförmigen Ausnehmung entspricht, so dass zwischen der Oberfläche des Heizelements und der Innenseite der nutförmigen Ausnehmung kein Luftspalt ausgebildet ist.

Es kann weiter vorgesehen sein, dass in die nutförmige Ausnehmung des Walzenkörpers eine Wärmeleitpaste eingebracht wird. Bei der Wärmeleitpaste handelt es sich um ein vorzugsweise pastenförmiges Material hoher Wärmeleitfähigkeit, das auf Grund seiner Konsistenz sowohl makroskopische als auch mikroskopische Abstandsräume zwischen der Oberfläche des Heizelements und der Innenseite der nutförmigen Ausnehmung vollständig auszufüllen vermag und so die für die Wärmeübertragung durch Wärmeleitung zur Verfügung stehende Kontaktfläche deutlich erhöht. Auf diese Weise kann der Energiebedarf für die Beheizung des Walzenkörpers verringert werden und es können lokale Temperaturabweichungen in Form von Wärmeinseln vermieden werden.

Weiter kann vorgesehen sein, dass in die nutförmige Ausnehmung des Walzenkörpers eine Trennpaste eingebracht wird, die das Verschweißen der Oberfläche des Heizelements mit der Innenseite der nutförmigen Ausnehmung verhindert. Bei längerem Betriebseinsatz kann ein solches Verschweißen eintreten, beispielsweise durch Diffusion von Legierungsbestandteilen, wodurch insbesondere ein zerstörungsfreies Auswechseln des Heizelements im Reparaturfall erschwert oder nicht möglich ist.

Es kann vorzugsweise vorgesehen sein, dass die Trennpaste eine Wärmeleitpaste ist.

Vorteilhafterweise kann das elektrische Heizelement als ein Koaxial-Heizelement ausgebildet sein, mit einem zentrisch angeordneten elektrischen Heizleiter, der von einer Isolierschicht umhüllt ist und in einem Mantelrohr angeordnet ist. Das Mantelrohr kann beispielsweise aus einem Metall mit hoher Wärmeleitfähigkeit ausgebildet sein.

Es kann vorgesehen sein, dass der Durchmesser des Heizelements im Bereich von 2 bis 5 mm ist.

Durch die Ausbildung der Walze mit in axialer Erstreckung angeordneten Heizzonen ist es möglich, über die gesamte Walzenlänge ein definiertes Temperaturprofil einzustellen.

Es kann vorgesehen sein, dass die Walze 3 bis 16 Heizzonen aufweist, bevorzugt 10 bis 14 Heizzonen und noch weiter bevorzugt 12 Heizzonen aufweist. Bei einer Walze mit drei Heizzonen können die Heizzonen so ausgeführt sein, dass im Außenbereich der Walze, insbesondere nahe an ihren Befestigungsstellen vergleichsweise schmale Heizzonen und zwischen diesen beiden äußeren Heizzonen eine vergleichsweise breitere innere Heizzone vorgesehen ist.

Pro Heizzone ist mindestens ein Heizelement vorgesehen. Es ist möglich, dass mehrere Heizelemente eine Heizzone bilden, insbesondere wenn wenige verhältnismäßig breite Heizzonen vorgesehen sind. Es hat sich jedoch bewährt, die Breite der Heizzone kleiner als 100 mm zu wählen, beispielsweise ca. 73 mm.

Vorteilhafterweise kann vorgesehen sein, dass die Temperatur der Heizelemente separat regelbar ist. Es kann also vorgesehen sein, dass jedes der Heizelemente an einen separaten Temperaturregler angeschlossen ist, der in Abhängigkeit von der Temperatur des Heizelements die Spannung und/oder die Stromstärke und/oder das Tastverhältnis der elektrischen Stromquelle regelt.

Es kann auch vorgesehen sein, dass die Heizelemente mit einer unterschiedlichen Heizleistung ausgebildet sind.

Weiter kann vorgesehen sein, dass jede Heizzone mindestens einen Temperaturfühler aufweist. Bei dem Temperaturfühler kann es sich beispielsweise um ein Thermoelement oder um ein Widerstandsthermometer handeln, doch es ist auch jeder andere Temperaturfühler einsetzbar, der ein temperaturabhängiges elektrisches Ausgangssignal bereitstellt. Es ist auch möglich, den Widerstandsdraht der Heizelemente als Temperaturfühler zu verwenden, wobei die Temperaturabhängigkeit des Widerstandes des Widerstandsdrahts als Temperaturmessgröße nutzbar ist. Ein nichtlineare Temperatur-Widerstandskennlinie kann beispielsweise mit Hilfe einer computergestützten Linearisierungseinheit, die als eine Baugruppe eines Temperaturreglers ausgebildet sein kann, linearisiert werden. Es kann auch vorgesehen sein, die Temperaturabhängigkeit des Widerstandes des Widerstandsdrahts direkt zur Temperaturregelung zu nutzen, wobei vorteilhafterweise eine konstante Versorgungsspannung vorgesehen sein kann.

Es kann weiter vorgesehen sein, dass die Temperatur jeder Heizzone separat regelbar ist. Es kann also vorgesehen sein, dass das oder die Heizelemente jeder Heizzone an einen separaten Temperaturregler angeschlossen ist bzw. sind, der in Abhängigkeit von der Temperatur des Heizelements die Spannung und/oder die Stromstärke und/oder das Tastverhältnis der elektrischen Stromquelle regelt.

Weiter kann vorgesehen sein, dass die Steigung der Ausnehmung 8 bis 12 mm beträgt, bevorzugt 10 mm beträgt.

Weitere vorteilhafte Ausgestaltungen sind auf eine besonders energiesparende Ausführung gerichtet.

Es kann vorgesehen sein, dass auf dem Außenmantel der Walze Prägeringe angeordnet sind.

Vorteilhafterweise kann die Walze vier bis sechs Heizzonen aufweisen und auf dem Außenmantel der Walze können sechs bis acht Prägeringe angeordnet sein. Die Prägeringe können beispielsweise elektrisch beheizbar sein. Die elektrische Beheizung der Prägeringe geschieht dabei unabhängig von der elektrischen Heizung der Heizzonen im Inneren der Walze durch in den Prägeringen angeordnete Heizelemente. Es kann vorgesehen sein, das bzw. die elektrischen Heizelement(e) so am Prägering anzuordnen, wie weiter oben für die Prägewalze beschrieben. Die Prägeringe können eine konstante Breite aufweisen, sie können jedoch auch mit unterschiedlicher Breite ausgebildet sein.

Es kann weiter vorgesehen sein, dass zwischen benachbarten Prägeringen ein Distanzring angeordnet ist. Mittels der Distanzringe kann der Abstand der Prägeringe eingestellt werden. Es ist auch möglich, dass zwischen zwei benachbarten Prägeringen mehr als ein Distanzring angeordnet ist. Es kann beispielsweise ein in der Breitenabmessung geometrisch gestufter Satz von Distanzringen vorgesehen sein, um nahezu beliebige Abstände zwischen den Prägeringen einstellen zu können. Die Distanzringe weisen dabei in vorteilhafter Weise dieselbe Dicke wie die Prägeringe auf, damit die nebeneinander liegenden Prägeringe und Distanzringe auf der Außenfläche der Walze eine weitgehend gleichmäßige Fläche erzeugen, auf welcher das zu prägende Substrat gleichmäßig und eben bzw. flach aufliegt. Es kann damit verhindert werden, dass sich das Substrat in etwaige Lücken zwischen Distanzringen und Prägeringen einlegt, dabei Falten bildet und/oder beschädigt wird.

Mit der vorgeschlagenen Verwendung von Prägeringen und Distanzringen kann eine Energieeinsparung zwischen 60 und 80 % erzielt werden, je nachdem, wie das Flächenverhältnis zwischen beheizten Prägeringen und nicht beheizten Distanzringen ist. Je höher der Flächenanteil der nicht beheizten Distanzringe ist, desto höher kann die Energieeinsparung sein. Ein weiterer Vorteil besteht darin, dass der Prozessablauf vereinfacht werden kann, beispielsweise durch Verzicht auf nachfolgende Kühlung bei Papier, oder das Einsatzgebiet erweitert werden kann, beispielsweise das Prägen von dünnem thermoplastischem Substrat mit nachfolgender Kühlung möglich ist. Dafür weisen die Distanzringe in einer bevorzugten Ausführung an ihrer Oberfläche eine wärmeisolierende Beschichtung, beispielsweise aus Silikon oder einem ähnlichen Material auf, um einen Wärmeaustrag aus dem Walzeninneren auf das Substrat in diesem Bereich zu verhindern. Höhere Herstellungskosten der Walze und Umrüstkosten werden durch die erreichte Energieeinsparung schnell amortisiert.

Eine Prägevorrichtung für Papier und/oder Kunststofffolien oder dergleichen kann vorteilhafterweise mit einer oder mehreren der beheizbaren Walzen ausgebildet sein.

Die Prägevorrichtung kann eine Steuereinrichtung zum separaten Regeln der Heizzonen aufweisen, die Eingänge zum Anschluss der in den Heizzonen angeordneten Temperaturfühler und separate Ausgänge zum Anschluss der separat geregelten Heizelemente aufweist. Für n Heizzonen können folglich n voneinander unabhängige Regelkreise vorgesehen sein, die jeweils einen Temperaturfühler, einen Temperaturregler und mindestens ein Heizelement aufweisen. Die Temperaturfühler können vorteilhafterweise über einen elektronischen Sollwerteingang verfügen und die Steuereinrichtung kann computergesteuert ausgebildet sein. So kann es möglich sein, ein Temperaturprofil der Walze festzulegen, in dem die Solltemperatur einer jeden Heizzone vorgegeben wird. Bei der weiter oben genannten bevorzugten Ausbildung der Walze mit 12 Heizzonen kann folglich ein Temperaturprofil mit 12 Stützstellen vorgegeben werden und durch eine auf einem Soll-Ist-Vergleich beruhende Temperaturregelung für jede der 12 Heizzonen im Betriebseinsatz bei schwankenden Umgebungsbedingungen eingehalten werden. Wie weiter oben bereits ausgeführt, kann eine Spannungsregelung oder eine Stromregelung oder eine Pulsweitenregelung oder dergleichen zur Temperaturregelung der Heizelemente vorgesehen sein.

Die Erfindung wird nun anhand von Ausführungsbeispielen näher erläutert. Es zeigen
- Fig. 1: eine Schnittansicht eines ersten Ausführungsbeispiels der erfindungsgemäßen Prägewalze;
- Fig. 2: eine Schnittansicht der Prägewalze entlang der Schnittlinie III-III in Fig. 1;
- Fig. 3: eine Schnittansicht der Prägewalze entlang der Schnittlinie IV-IV in Fig. 1;
- Fig. 4: eine Schnittansicht eines zweiten Ausführungsbeispiels der erfindungsgemäßen Prägewalze.

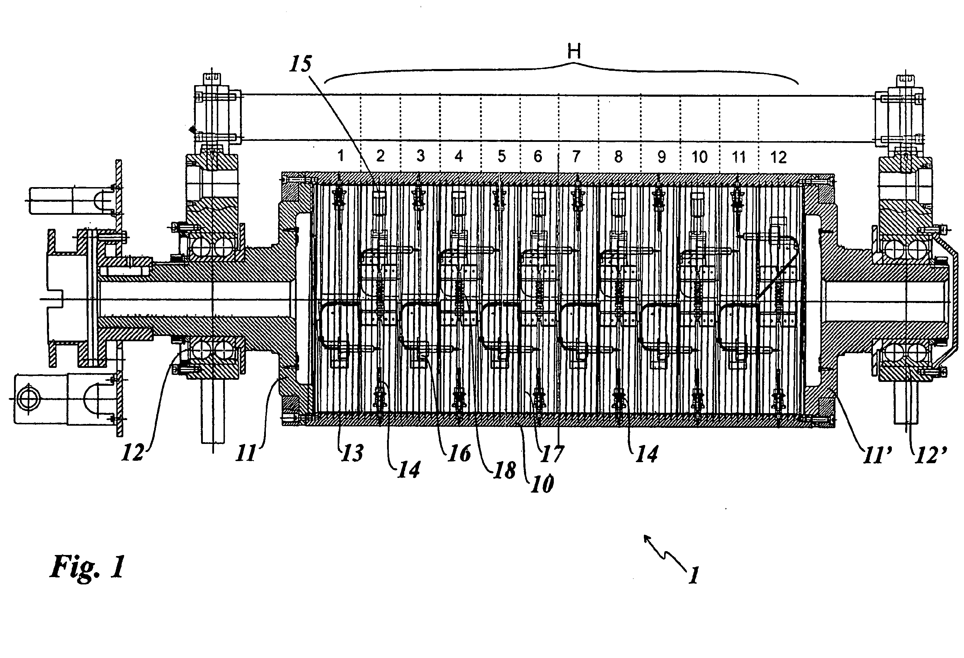

Fig. 1 zeigt eine beheizbare Prägewalze 1 mit einem als Hohlzylinder ausgebildeten Walzenkörper 10, der an seiner Innenwand eine spiralförmig umlaufende Nut 13n zur Aufnahme mehrerer rohrförmiger Heizelemente 13 aufweist. Die Nut 13n ist in der Art eines in den Walzenkörper 10 eingebrachten Innengewindes ausgebildet und bildet eine Gewindebahn.

Der Walzenkörper 10 weist an seinen Stirnflächen Lagerflansche 11 und 11' auf, die in Kugellagern 12 bzw. 12' drehbar gelagert. Die Lagerflansche 11 und 11' sind drehstarr mit dem Walzenkörper 10 verbunden. Die Lagerflansche 11 und 11' weisen jeweils ein zentrales Durchgangsloch aus, das von elektrischen Zu- und Ableitungen für die Heizelemente 13 sowie für Temperaturfühler 14 durchgriffen sein kann.

Das Heizelement 13 ist in die Nut 13n eingepresst, so dass ein guter thermischer Kontakt zwischen dem Heizelement 13 und dem Walzenkörper 10 ausgebildet ist. Die Steigung der Nut 13n beträgt in dem in Fig. 1 bis 3 dargestellten ersten Ausführungsbeispiel etwa 10 mm, der Außendurchmesser des rohrförmigen Heizelements 13 etwa 2 bis 5 mm. Vor dem Einbringen des Heizelements 13 kann in die Nut 13n eine Wärmeleitpaste eingebracht sein. Bei der Wärmeleitpaste handelt es sich um ein vorzugsweise pastenförmiges Material hoher Wärmeleitfähigkeit, das einen fertigungsbedingten Spalt zwischen der Oberfläche des Heizelements 13 und der Innenseite der Nut 13n vollständig ausfüllt und dabei auch mikroskopische Unebenheiten in den Oberflächen des Heizelements 13 und der Innenseite der Nut 13n ausfüllt. Dadurch wird der thermische Kontakt zwischen dem Heizelement 13 und dem Walzenkörper 10 weiter verbessert und so die für die Wärmeübertragung durch Wärmeleitung zur Verfügung stehende Fläche deutlich erhöht. Auf diese Weise kann der Energiebedarf für die Beheizung des Walzenkörpers 10 verringert werden und es können lokale Temperaturabweichungen in Form von Wärmeinseln vermieden werden. Vorteilhafterweise weist die Wärmeleitpaste auch die Eigenschaft einer Trennpaste auf, die das Verschweißen der Oberfläche des Heizelements 13 mit der Innenseite der Nut 13n verhindert. Bei längerem Betriebseinsatz kann ein solches Verschweißen eintreten, beispielsweise durch Diffusion von Legierungsbestandteilen des Walzenkörpers 10 und/oder des Mantelwerkstoffs des Heizelements 13 in das jeweils benachbarte Material, wodurch insbesondere ein zerstörungsfreies Auswechseln des Heizelements 13 im Reparaturfall erschwert oder nicht möglich ist.

Das Heizelement 13 ist aus einem mit einer elektrischen Isolierschicht ummantelten Heizdraht gebildet, der koaxial in einem Hüllrohr angeordnet ist. Die beiden Endabschnitte des Heizelements 13 sind jeweils an einen Heizelementanschluss 16 geführt. In dem in Fig. 1 bis 3 dargestellten Ausführungsbeispiel sind zwölf Heizelemente 13 vorgesehen, die zwölf Heizzonen H ausbilden. Die Heizelementanschlüsse 16 sind über elektrische Anschlussleitungen auf im Innern des Walzenkörpers 10 angeordnete Kabelführungen 15 geführt und an einem Schleifring miteinander verschaltet. Jedes der zwölf Heizelemente 13 ist getrennt regelbar. Untersuchungen haben gezeigt, dass hierdurch insbesondere im Randbereich des Walzkörpers verursachte Verspannungen vermieden werden können und so das Prägeergebnis verbessert werden kann. Bei der erfindungsgemäßen Prägewalze kann die Temperatur der Heizzonen H so geregelt werden, dass die Temperatur der nicht benutzten Randbereiche nicht höher ist als die Temperatur der benutzten Heizzonen. Die Temperatur der Heizzonen H wird durch die in den Heizzonen H angeordneten Temperaturfühler 14 bestimmt. Bei den Temperaturfühlern 14 kann es sich um Thermoelemente handeln, beispielsweise vom Typ NiCr-Ni. Vorzugsweise können die Thermoelemente als Widerstandstemperaturfühler ausgebildet sein. Es ist aber auch möglich, beispielsweise Mantelthermoelemente als Temperaturfühler vorzusehen. Der Messwert der temperaturfühler kann über Schleifringe nach außen übertragen werden, wobei die Werkstoffpaarung der Schleifringe bevorzugt Rhodium/Silbergraphit ist.

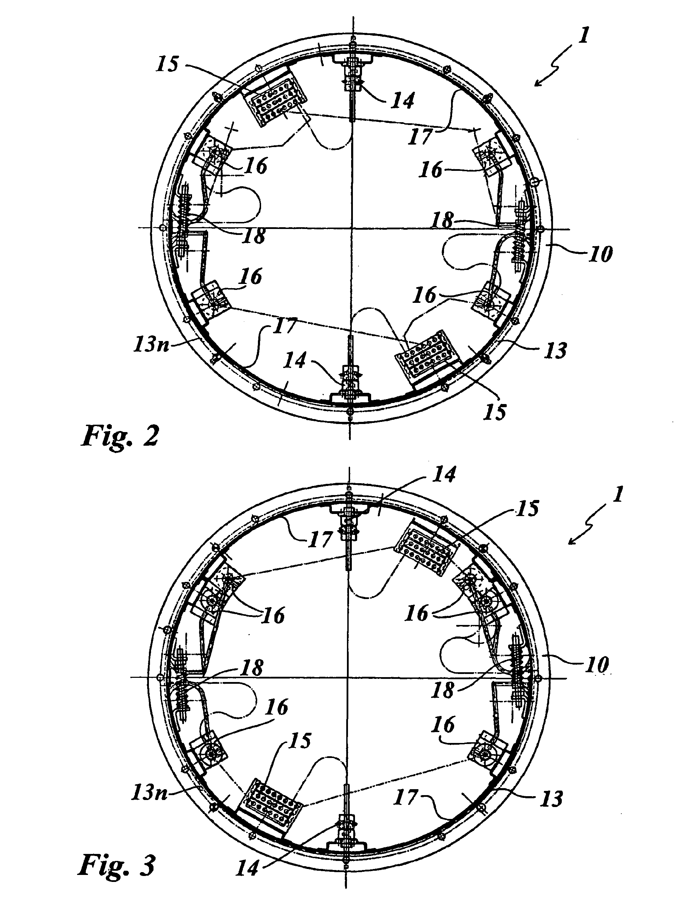

Die Fig. 2 und 3 zeigen im Einzelnen die Anordnung der Temperaturfühler 14, der Heizelementanschlüsse 16 und der Kabelführungen 15 im Innern des Walzenkörpers 10.

Die Temperaturfühler 14, die Heizelementanschlüsse 16 und die Kabelführungen 15 a sind auf zweigeteilten Spannringen 17 montiert, wobei einander gegenüber angeordnete Spannfedern 18 die beiden Spannringhälften des Spannrings 17 auseinanderdrücken, so dass der Spannring 17 an der Innenwand des Walzenkörpers 10 unter Spannung anliegt. Pro Heizzone H ist ein Spannring 17 vorgesehen (Fig. 1).

Die erfindungsgemäße Prägewalze 1 ermöglicht hohe spezifische Heizleistungen an der Walzenoberfläche mit 7,8 W/cm² bei sehr guter Temperaturkonstanz. So konnten folgende Werte erreicht werden:
- Unter- und Überschwingen bei Start bzw. Stop: jeweils 1 K
- Temperaturkonstanz in der Produktion: ± 0,3 K

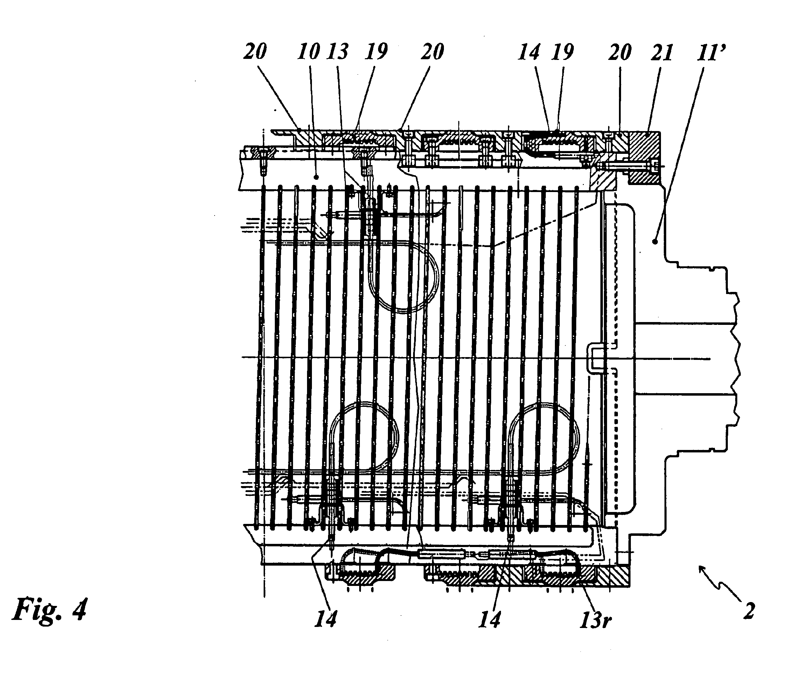

Die Fig. 4 zeigt ein zweites Ausführungsbeispiel. Eine Prägewalze 2 ist wie die weiter oben beschriebene Prägewalze 1 ausgebildet, mit dem Unterschied, dass die Prägewalze 2 nur 6 Heizzonen H aufweist und dass auf der Außenwand des Walzenkörpers 10 beheizbare Prägeringe 19, Distanzringe 20 und Schmitzringe 21 in folgender Anordnung angeordnet sind: beginnend an der Antriebsseite der Prägewalze 2 ist zunächst ein fest mit dem Walzenkörper 10 verbundener Schmitzring 21 angeordnet. Der Schmitzring 21 verhindert den sogenannten Schmitz. Der Schmitz bezeichnet in der Drucktechnik Fehler in der Druckabwicklung, wie ein verschmierter Abdruck oder ein unscharfes Druckbild. Nun folgen in alternierender Reihenfolge die Distanzringe 20 und die beheizbaren Prägeringe 19, die als verschiebbare Ringe ausgebildet sind. Die Ringanordnung ist durch einen weiteren Distanzring 20 und einen weiteren Schmitzring 21 abgeschlossen, die ebenfalls verschiebbar sind. Die Abstände zwischen den Prägeringen 19 sind durch die zwischen den Prägeringen angeordneten Distanzringe 20 bestimmt. Die Prägebreite wird entweder durch die Prägefolie oder durch die Breite der Prägeringe 19 bestimmt. Vorzugsweise ist vorgesehen, dass die Prägeringe 19 eine konstante Breite aufweisen.

Die Prägewalze 2 weist vorzugsweise vier bis sechs Heizzonen H auf. Die Anzahl der Prägeringe 19 kann dabei im Bereich von sechs bis acht Prägeringen liegen.

Die Anzahl der Prägeringe 19 ist unabhängig von der Anzahl der Heizzonen wählbar. Als bevorzugtes Material für die Prägeringe ist Stahl vorgesehen. Die Befestigung der Prägeringe 19 ist durch Aufschrumpfen oder über in der Oberfläche der Prägewalze vorgesehene Längsnuten sowie Fixierung durch Schrauben und Nutsteine möglich. Es kann auch vorgesehen sein, Prägeringe und Distanzringe als auf die Prägewalze aufschiebbare Einheit auszubilden, beispielsweise als auf die Prägewalze aufschiebbares Rohr. Dabei können die Distanzringe vorteilhafterweise dünner als die Prägeringe ausgebildet sein und die Durchmesserdifferenz durch eine Silikonschicht ausgeglichen sein. Nach dem Einbringen der Silikonschicht kann das besagte Rohr zur Ausbildung einer glatten Oberfläche überschliffen sein.

Weiter können die Prägeringe eine glatte Oberfläche aufweisen oder mit einer Oberflächenstruktur ausgebildet sein und einen Prägestempel bilden.

Im Vergleich zu der in Fig. 1 bis 3 beschriebenen Prägewalze 1 sind folgende vorteilhafte Effekte erzielbar:
- Energieeinsparung, bei sechs Prägeringen ca. 80 % der Heizenergie, bei acht Prägeringen ca. 60 % der Heizenergie;
- Fortfall der nachfolgenden Kühlung bei Prägen von Papier;
- Prägen von dünnem thermoplastischen Substrat mit nachfolgender Kühlung möglich.

Die höheren Kosten der Prägewalze und die Umrüstkosten bei neuen Spurabständen sind durch die Energieeinsparung in kurzer Zeit amortisiert. Durch die erfindungsgemäße Anordnung der Heizzonen im Innern der Prägewalze ergeben sich zusammengefasst folgende Vorteile:
- bessere Temperatursteuerung des einzelnen Segments;
- geringere Ströme pro Einzelsegment und damit dünnere Kabel und vereinfachte Installation;
- gute Temperaturverteilung über die gesamte Prägewalze;
- insbesondere in Kombination mit Prägeringen schnelle und gleichmäßige Aufheizung der gesamten Prägewalze (innen und außen) und damit schnelle Inbetriebnahme;
- erhöhte mechanische Stabilität der Prägewalze durch gleichmäßige Temperaturverteilung;
- Kompensation des Wärmeabflusses am äußeren Rand der Prägewalze.

### Bezugszeichenliste

- 1, 2: Prägewalze
- 10: Walzenkörper
- 11,11': Lagerflansch
- 12, 12': Kugellager
- 13: Heizelement
- 13r: Heizelement des Prägeringes
- 13n: Nut
- 14: Temperaturfühler
- 15: Kabelführung
- 16: Heizelementanschluss
- 17: Spannring
- 18: Spannfeder
- 19: Prägering
- 20: Distanzring
- 21: Schmitzring

## Patentansprüche

1. Beheizbare Walze, insbesondere zur Bearbeitung von bahnartigen Materialien, mit einem hohlzylinderförmigen Walzenkörper (10), der eine nutförmige Ausnehmung (13n) zur Aufnahme von Heizelementen (13) aufweist, wobei die Heizelemente (13) im wärmeleitenden Kontakt zu dem Walzenkörper (10) stehen, wobei die Walze (1,2) in axialer Erstreckung angeordnete Heizzonen (H) aufweist, wobei pro Heizzone (H) mindestens ein Heizelement (13) vorgesehen ist, und wobei die Heizelemente (13) elektrische Heizelemente sind,
**dadurch gekennzeichnet,**
**dass** der Walzenkörper (10) in der Innenwand die nutförmige Ausnehmung (13n) zur Aufnahme von Heizelementen (13) aufweist,
und **dass** die Anschlüsse benachbarter Heizelemente (13) um 180° versetzt angeordnet sind.

2. Beheizbare Walze nach Anspruch 1,
**dadurch gekennzeichnet,**
**dass** die nutförmige Ausnehmung (13n) in der Innenwand des Walzenkörpers (10) in Form einer Gewindebahn verläuft.

3. Beheizbare Walze nach Anspruch 1 oder 2,
**dadurch gekennzeichnet,**
**dass** die Heizelemente (13) als rohrförmige Heizelemente ausgebildet sind.

4. Beheizbare Walze nach einem der vorangehenden Ansprüche,
**dadurch gekennzeichnet,**
**dass** die Walze 4 bis 16 Heizzonen (H) aufweist, insbesondere 10 bis 14 Heizzonen (H) aufweist.

5. Beheizbare Walze nach einem der vorangehenden Ansprüche,
**dadurch gekennzeichnet,**
**dass** die Temperatur der Heizelemente (13) separat regelbar ist.

6. Beheizbare Walze nach einem der vorangehenden Ansprüche,
**dadurch gekennzeichnet,**
**dass** jede Heizzone (H) mindestens einen Temperaturfühler (14) aufweist.

7. Beheizbare Walze nach einem der vorangehenden Ansprüche,
**dadurch gekennzeichnet,**
**dass** die Temperatur jeder Heizzone (H) separat regelbar ist.

8. Beheizbare Walze nach einem der Ansprüche 2 bis 7,
**dadurch gekennzeichnet,**
**dass** die Steigung der Ausnehmung (13n) 8 bis 12 mm beträgt, insbesondere 10 mm beträgt.

9. Beheizbare Walze nach einem der Ansprüche 3 bis 8,
**dadurch gekennzeichnet,**
**dass** der Durchmesser der Heizelemente (13) im Bereich von 2 bis 5 mm ist.

10. Beheizbare Walze nach einem der vorangehenden Ansprüche,
**dadurch gekennzeichnet,**
**dass** auf dem Außenmantel der Walze Prägeringe angeordnet sind.

11. Beheizbare Walze nach Anspruch 10,
**dadurch gekennzeichnet,**
**dass** die Walze (2) vier bis sechs Heizzonen (H) aufweist und dass auf dem Außenmantel der Walze (2) sechs bis acht Prägeringe (19) angeordnet sind.

12. Beheizbare Walze nach Anspruch 10 oder 11,
**dadurch gekennzeichnet,**
**dass** die Prägeringe jeweils ein Heizelement (13r) aufweisen.

13. Beheizbare Walze nach einem der Ansprüche 10 bis 12,
**dadurch gekennzeichnet,**
**dass** zwischen benachbarten Prägeringen ein Distanzring (20) angeordnet ist.

14. Prägevorrichtung mit einer beheizbaren Walze nach einem der Ansprüche 1 bis 13.

15. Prägevorrichtung nach Anspruch 14,
**dadurch gekennzeichnet,**
**dass** eine Steuereinrichtung zum separaten Regeln der Heizzonen (H) vorgesehen ist, die Eingänge zum Anschluss der in den Heizzonen (H) angeordneten Temperaturfühler (14) und separate Ausgänge zum Anschluss der separat geregelten Heizelemente (13) aufweist.

## Claims

1. Heatable roller, in particular for treating web-type materials, comprising a hollow-cylindrical roller body (10) having a groove-shaped cutout (13n) for receiving heating elements (13), wherein the heating elements (13) are in heat-conductive contact with the roller body (10), wherein the roller (1, 2) has heating zones (H) arranged in axial extent, wherein at least one heating element (13) is provided per heating zone (H), and wherein the heating elements (13) are electric heating elements, **characterized in that** the roller body (10) has in the internal wall the groove-shaped cutout (13n) for receiving heating elements (13) and **in that** the connections of neighbouring heating elements (13) are offset by 180°.

2. Heatable roller according to Claim 1, **characterized in that** the groove-shaped cutout (13n) in the internal wall of the roller body (10) extends in the form of a thread path.

3. Heatable roller according to Claim 1 or 2, **characterized in that** the heating elements (13) are in the form of tubular heating elements.

4. Heatable roller according to one of the preceding claims, **characterized in that** the roller has 4 to 16 heating zones (H), in particular 10 to 14 heating zones (H).

5. Heatable roller according to one of the preceding claims, **characterized in that** the temperature of the heating elements (13) can be regulated separately with closed-loop control.

6. Heatable roller according to one of the preceding claims, **characterized in that** each heating zone (H) has at least one temperature sensor (14).

7. Heatable roller according to one of the preceding claims, **characterized in that** the temperature of each heating zone (H) can be regulated separately with closed-loop control.

8. Heatable roller according to one of Claims 2 to 7, **characterized in that** the pitch of the recess (13n) is 8 to 12 mm, in particular is 10 mm.

9. Heatable roller according to one of Claims 3 to 8, **characterized in that** the diameter of the heating elements (13) is in the range of 2 to 5 mm.

10. Heatable roller according to one of the preceding claims, **characterized in that** embossing rings are arranged on the outer jacket of the roller.

11. Heatable roller according to Claim 10, **characterized in that** the roller (2) has four to six heating zones (H) and **in that** six to eight embossing rings (19) are arranged on the outer jacket of the roller (2).

12. Heatable roller according to Claim 10 or 11, **characterized in that** the embossing rings have in each case one heating element (13r).

13. Heatable roller according to one of Claims 10 to 12, **characterized in that** a spacer ring (20) is arranged between neighbouring embossing rings.

14. Embossing apparatus comprising a heatable roller according to one of Claims 1 to 13.

15. Embossing apparatus according to Claim 14, **characterized in that** a control device for separate closed-loop control of the heating zones (H) is provided, which has inputs for connecting the temperature sensors (14) arranged in the heating zones (H) and separate outputs for connecting the heating elements (13) which are regulated separately with closed-loop control.

## Revendications

1. Cylindre pouvant être chauffé, en particulier pour l'usinage de matériaux de type bande, avec un corps de cylindre en forme de cylindre creux (10) qui présente un évidement en forme de rainure (13n) pour la réception d'éléments de chauffe (13), sachant que les éléments de chauffe (13) sont en contact thermoconducteur avec le corps de cylindre (10), sachant que le cylindre (1, 2) présente des zones de chauffe (H) disposées dans l'extension axiale, sachant que par zone de chauffe (H) est prévu au moins un élément de chauffe (13), et sachant que les éléments de chauffe (13) sont des éléments de chauffe électriques,
**caractérisé en ce que** le corps de cylindre (10) présente, dans la paroi intérieure, l'évidement en forme de rainure (13n) pour la réception d'éléments de chauffe (13) et **en ce que** les raccords d'éléments de chauffe contigus (13) sont disposés décalés de 180°.

2. Cylindre pouvant être chauffé selon la revendication 1, **caractérisé en ce que** l'évidement en forme de rainure (13n) s'étend dans la paroi intérieure du corps de cylindre (10) sous la forme d'une bande filetée.

3. Cylindre pouvant être chauffé selon la revendication 1 ou 2, **caractérisé en ce que** les éléments de chauffe (13) sont réalisés comme des éléments de chauffe tubulaires.

4. Cylindre pouvant être chauffé selon l'une quelconque des revendications précédentes, **caractérisé en ce que** le cylindre présente 4 à 16 zones de chauffe (H), en particulier 10 à 14 zones de chauffe (H).

5. Cylindre pouvant être chauffé selon l'une quelconque des revendications précédentes, **caractérisé en ce que** la température des éléments de chauffe (13) peut être régulée séparément.

6. Cylindre pouvant être chauffé selon l'une quelconque des revendications précédentes, **caractérisé en ce que** chaque zone de chauffe (H) présente au moins un capteur de température (14).

7. Cylindre pouvant être chauffé selon l'une quelconque des revendications précédentes, **caractérisé en ce que** la température de chaque zone de chauffe (H) peut être régulée séparément.

8. Cylindre pouvant être chauffé selon l'une quelconque des revendications 2 à 7, **caractérisé en ce que** le pas de l'évidement (13n) est compris entre 8 et 12 mm, en particulier s'élève à 10 mm.

9. Cylindre pouvant être chauffé selon l'une quelconque des revendications 3 à 8, **caractérisé en ce que** le diamètre des éléments de chauffe (13) est compris entre 2 et 5 mm.

10. Cylindre pouvant être chauffé selon l'une quelconque des revendications précédentes, **caractérisé en ce que** des viroles sont disposées sur l'enveloppe extérieure du cylindre.

11. Cylindre pouvant être chauffé selon la revendication 10, **caractérisé en ce que** le cylindre (2) présente quatre à six zones de chauffe (H) et **en ce que** six à huit viroles (19) sont disposées sur l'enveloppe extérieure du cylindre (2).

12. Cylindre pouvant être chauffé selon la revendication 10 ou 11, **caractérisé en ce que** les viroles présentent chacune un élément de chauffe (13r).

13. Cylindre pouvant être chauffé selon l'une quelconque des revendications 10 à 12, **caractérisé en ce qu'**un anneau d'écartement (20) est disposé entre des viroles contiguës.

14. Dispositif de gaufrage avec un cylindre pouvant être chauffé selon l'une quelconque des revendications 1 à 13.

15. Dispositif de gaufrage selon la revendication 14, **caractérisé en ce qu'**un dispositif de commande est prévu pour la régulation séparée des zones de chauffe (H), lequel présente des entrées pour le raccordement des capteurs de température (14) disposés dans les zones de chauffe (H) et des sorties séparées pour le raccordement des éléments de chauffe (13) régulés séparément.
